Europäisches Patentamt

European Patent Office

Office européen des brevets

(11) Publication number: **0 335 376**
**A2**

## (12) EUROPEAN PATENT APPLICATION

(21) Application number: **89105548.5**

(22) Date of filing: **29.03.89**

(51) Int. Cl.⁴: **G06F 3/023 , G06F 1/00**

(30) Priority: **31.03.88 JP 78728/88**

(43) Date of publication of application:
**04.10.89 Bulletin 89/40**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Yano, Yasuhiro**
**c/o Patent Division Kabushiki Kaisha**
**Toshiba**
**1-1 Shibaura 1-chome Minato-ku Tokyo**
**105(JP)**
Inventor: **Ashida, Keisuke**
**c/o Patent Division Kabushiki Kaisha**
**Toshiba**
**1-1 Shibaura 1-chome Minato-ku Tokyo**
**105(JP)**

(74) Representative: **Henkel, Feiler, Hänzel &**
**Partner**
**Möhlstrasse 37**
**D-8000 München 80(DE)**

(54) **Portable electronic calculator.**

㊼ A portable electronic calculator includes a liquid crystal display unit (11) for performing display operations in accordance with display signals, a key input unit (12) for entering various data, and an LSI (13), including a plurality of display signal output terminals, for performing key input wait processing for a key input from the key input unit (12), key input processing for determining a key when a key input is performed through the key input unit (12), operation processing for performing an operation corresponding to the determined key and generating display data in accordance with the operation result, and key presence/absence processing for detecting the presence/absence of a key input from the key input unit (12) upon completion of the operation processing, and for intermittently driving the display signal output terminals in accordance with the display data during execution of the key input wait processing and the key presence/absence processing so as to cause the terminals to output pulse-like signals.

F I G. 4

## Portable electronic calculator

The present invention relates to a portable electronic calculator having a liquid crystal display unit and a key input section and, more particularly, to a portable electronic calculator driven by a power source having a low power capacity, such as a solar cell.

As the number of components of a portable electronic calculator is reduced, a recent portable electronic calculator is constituted by a minimum number of components, such as a battery, in addition to a display unit, a key input unit, and an integrated circuit (IC) for performing operations and display controls. In order to reduce the chip size of an IC and decrease the number of connections between components, the number of terminals of the IC must be minimized. Such an arrangement is currently realized by using a signal terminal for a plurality of signals. For example, a display signal to be supplied to a display unit and a key detection signal to be supplied to a key input unit are superposed one upon the other, and are output from a single terminal. In a portable electronic calculator using such a system, a display operation must be performed even if a key switch is depressed in a so-called off-chattering period, in which the presence/absence of a key input is detected when a key input wait state is restored upon completion of an operation. For this reason, if simultaneous key depression occurs during this period, display signals output from different terminals may be short-circuited. In such a case, if one of the display signals is at "L" level and the other is at "H" level, a large current flows from the power source. Therefore, if the calculator is driven by a battery, the service life of the battery is shortened, or an operation error may occur because of a temporary voltage drop.

In the conventional portable electronic calculator, therefore, display signals are intermittently output as pulses, and the level of a display signal is dynamically held by utilizing a parasitic capacitor, thus shortening the period in which a current flows from the power source if display signals are short-circuited.

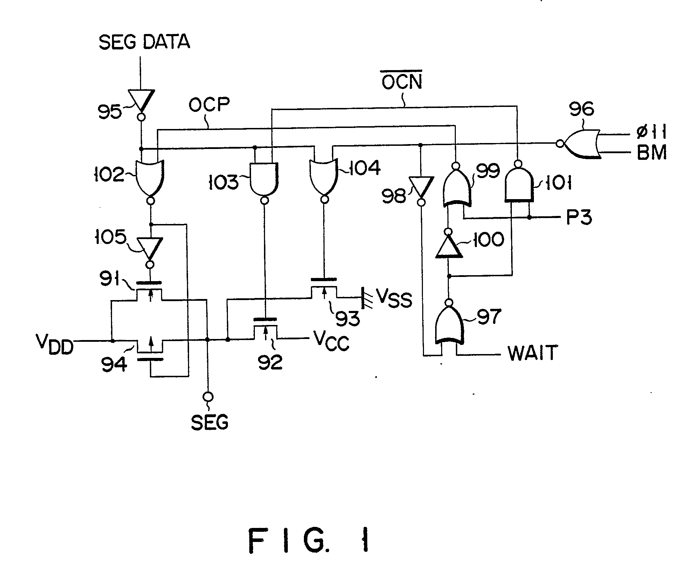

Fig. 1 is a circuit diagram showing an arrangement of part of an IC used in a conventional portable electronic calculator. Referring to Fig. 1, reference symbol SEG denotes a terminal from which a display signal to be supplied to a single segment electrode of a liquid crystal display unit (not shown) and a key detection signal to be supplied to a key input unit (not show) are output upon superposition. Reference numerals 91, 92, 93, and 94 denote n- or p-channel transistors for driving the terminal SEG; 95, an inverter for receiving segment data SEG Data; 96, a NOR gate for receiving a clock signal $\phi 11$ for key detection and an operation signal BM; 97, a NOR gate for receiving output from the NOR gate 96 through an inverter 98 and a wait signal WAIT; 99, a NOR gate for receiving output from the NOR gate 97 through an inverter 100 and a clock signal P3; 101, a NAND gate for receiving output from the NOR gate 97 and the clock signal P3; 102, a NOR gate for receiving output from the inverter 95 and the NOR gate 99; 103, a NAND gate for receiving output from the inverter 95 and the NAND gate 101; 104, a NOR gate for receiving output from the inverter 95 and the NOR gate 96; and 105, an inverter for receiving output from the NOR gate 102. Reference symbol VDD denotes a power source voltage of, for example, +3 V; VCC, a power source voltage of, e.g., +1.5 V; and VSS, a ground voltage. Output from the inverter 105, the NOR gate 102, the NAND gate 103, and the NOR gate 104 are respectively supplied to the gates of the transistors 91, 94, 92, and 93.

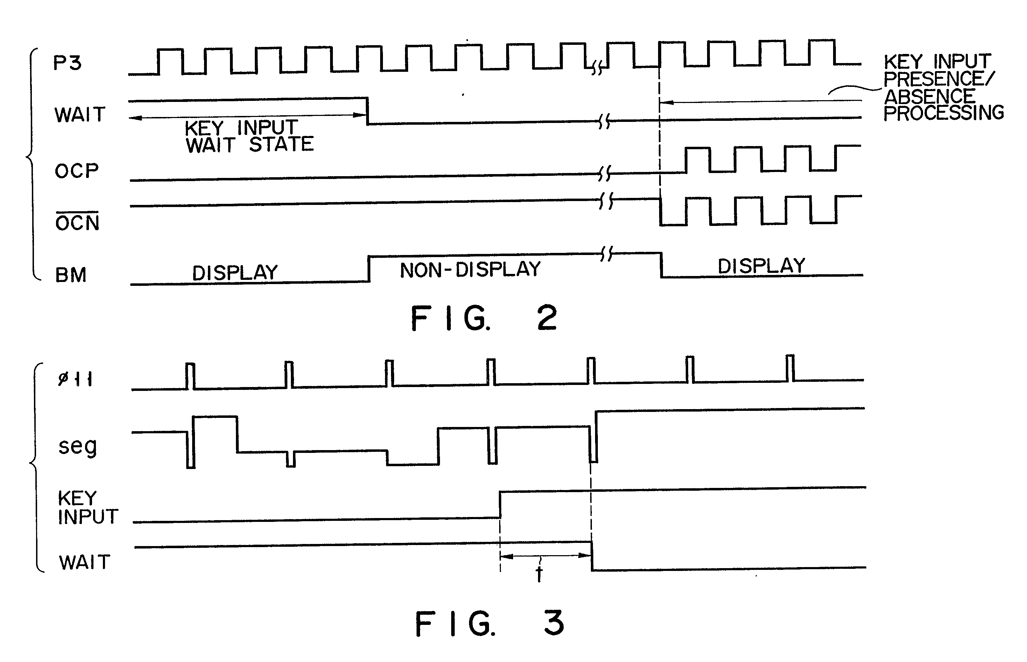

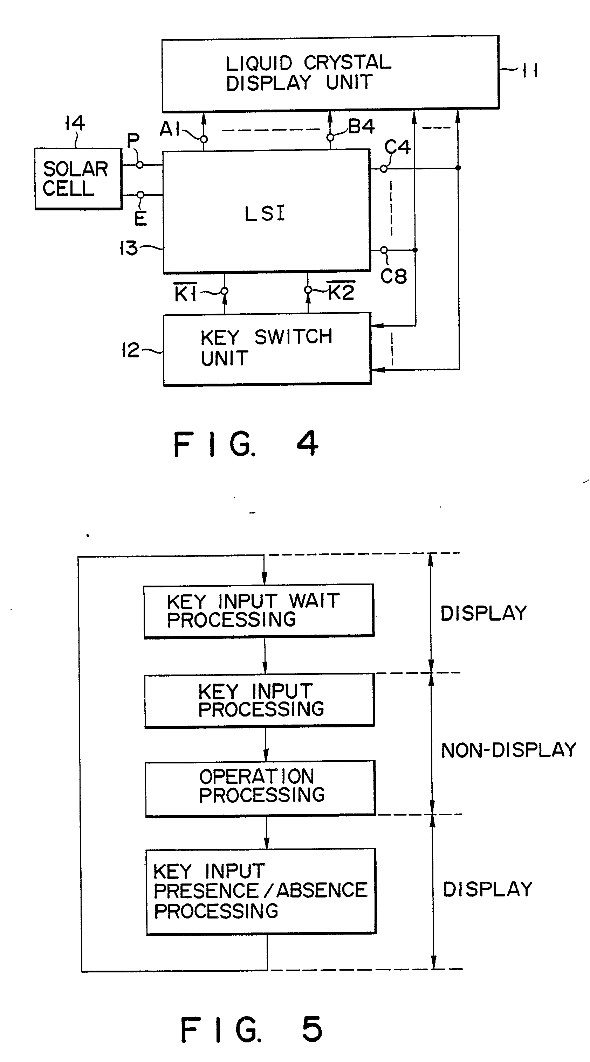

An operation of the circuit shown in Fig. 1 will be described below with reference to Figs. 2 and 3. The operation signal BM is a signal for output control of a display signal from the terminal SEG. The operation signal BM is kept at "H" level while an operating section (not shown) is in operation. During this operation period, the segment data SEG data is kept at "L" level. As a result, an output from the NOR gate 102 is set at "L" level, and subsequent output from the inverter 105 is set at "H" level, so that both the transistors 91 and 94 are turned on. In addition, output from the NOR gate 104 goes to "L" level, and the transistor 93 is turned off. Since output from the NOR gate 96 and the inverter 98 are respectively at "L" and "H" levels, the subsequent output from the NAND gate 101 is set at "H" level. Likewise, because an output from the inverter 95 is at "H" level, an output from the NAND gate 103 goes to "L" level, and the transistor 92 is turned off. Therefore, during operation of the operating section, the terminal SEG is charged by the power source voltage VDD through the ON transistors 91 and 94, and an output display signal is set at the "H" level. Subsequently, a segment of the liquid crystal display unit, to which this "H" level display signal is supplied, is set in a non-illumination state.

When the operation in the operating section is completed, the operation signal BM is set at "L" level, and the segment data SEG Data is set in accordance with an operation result. A key input wait state is not set immediately after the completion of the operation, hence this period serves as an off-chattering period during which depression of a key is checked. In this case, if keys are simultaneously depressed, display signals of "H" and "L" levels are short-circuited. As a result, a large current as described above flows through the power source. For this reason, control signal OCP and $\overline{OCN}$ shown in Fig. 2 are generated by the NOR and NAND gates 99 and 101 using, which are also connected to the pulse signal P3. The ON states of the transistors 91, 94, and 92 are then controlled by the generated control signals from the pulse signal P3 so as to intermittently drive the terminal SEG and to dynamically output the display signals, thereby preventing a short-circuit current from flowing from the power source. When this off-chattering period is completed, the wait signal WAIT is set at "L" level by program processing, and the signals OCP and $\overline{OCN}$ are respectively fixed at "L" and "H" levels.

That is, in the conventional portable electronic calculator, the control signals OCP and $\overline{OCN}$ are changed in accordance with the pulse signal P3 only in an off-chattering period so as to dynamically drive display signals.

In the conventional circuit, however, the following problems are posed. Referring to Fig. 3, reference symbol $\phi11$ denotes a key detection signal. A signal seg shown in Fig. 3 is obtained by superposing a display signal on the signal $\phi11$. When a key input signal in Fig. 3 is at "H" level, it means that a key is depressed. The key detection signal $\phi11$ output from the terminal SEG is a signal for detecting depression of a key. When the key input signal goes to "H" level immediately after the key detection signal $\phi11$ included in the signal seg is detected by a detecting circuit (not shown), display signals may be short-circuited in a time interval t until the next key detection signal is detected. The off-chattering period is completed by this time, and the signals OCP and $\overline{OCN}$ are respectively fixed at "L" and "H" levels. Therefore, if simultaneous key depression occurs in this period, a large short-circuit current flows from the power source.

When a portable electronic calculator is driven by a normal battery, such as a dry cell, a mercury battery, or a lithium battery, having a current capacity above that required to carry out an operation the voltage of the battery does not drop below the required operating voltage during the short period when a short-circuit occurs. However, if a battery having a low current capacity, such as a solar cell, is employed, short-circuiting of signals even for several milliseconds decreases the battery voltage to below the operating voltage and causes an operation error in the IC. Thus, in the conventional portable electronic calculator, if a battery having a low current capacity, such as a solar cell, is employed, an operation error may occur due to an instantaneous increase in current consumption.

The present invention has been made in consideration of the above-described situation, and has as its object to provide a portable electronic calculator which can employ à battery having a low current capacity, such as a solar cell, by preventing an operation error caused by an instantaneous increase in current consumption due to simultaneous key depression during a key input wait period.

According to the present invention, there is provided a portable electronic calculator comprising a display section for performing display operations in accordance with display signals, a key input section for entering various data, and an integrated circuit, including a plurality of display signal output terminals, for performing key input wait processing for input from the key input section, key input processing for determining a kind of key when input is performed through the key input section, operation processing for performing an operation corresponding to the determined kind of key and generating display data in accordance with the operation result, and key presence/absence processing for detecting the presence/absence of input from the key input section upon completion of the operation processing, and for intermittently driving the display signal output terminals in accordance with the display data during execution of the key input.wait processing and the key presence/absence processing so as to cause the terminals to output pulse-like signals.

In addition, according to the present invention, there is provided a portable electronic calculator, comprising a display section for performing display operations in accordance with display signals, a key input section for entering various data, an integrated circuit, including a plurality of display signal output terminals, for generating display signals for causing the display section to perform display operations and key detection signals to be supplied to the key input section, and superposing the signals to output the superposed signal from each of the display signal output terminals, and display signal output control means, arranged in the integrated circuit, for causing the display signals to be intermittently output for a time interval in which the display signals are output from the display signal output terminals.

This invention can be more fully understood from the following detailed description when taken in conjunction with the accompanying drawings, in which:

Fig. 1 is a circuit diagram showing an arrangement of part of an IC used in a conventional portable electronic calculator;

Figs. 2 and 3 are timing charts of the circuit in Fig. 1;

Fig. 4 is a block diagram showing an overall arrangement of a portable electronic calculator according to an embodiment of the present invention;

Fig. 5 is a flow chart for explaining an operation of the portable electronic calculator in Fig. 4;

Fig. 6 is a circuit diagram showing an internal circuit of an IC used in the portable electronic calculator of the embodiment;

Fig. 7 is a circuit diagram showing a key switch unit used in the portable electronic calculator of the embodiment;

Fig. 8 is a circuit diagram showing an internal circuit of an IC used in the portable electronic calculator of the embodiment; and

Figs. 9 to 11 are timing charts for explaining an operation of the portable electronic calculator of the embodiment.

An embodiment of the present invention will be described below with reference to the accompanying drawings.

A portable electronic calculator as shown in Fig. 4 comprises a liquid crystal display unit 11, a key switch unit 12 constituted by a plurality of key switches arranged in the form of a matrix, an integrated circuit (to be referred to as an LSI hereinafter) 13, including a ROM (not shown) for storing instructions and a RAM (not shown) for storing display data, for performing operation and display control, and a solar cell 14 for applying an operating voltage to the LSI 13.

In order to reduce the chip size of the LSI 13 and decrease the number of connections between the components, some of a plurality of terminals for outputting display signals to the liquid crystal display unit 11 are also used as terminals for outputting key detection signals to the key switch unit 12. More specifically, the LSI 13 comprises, e.g., two terminals $\overline{K1}$ and $\overline{K2}$ for key input, 24 segment terminals consisting of A1, B1, C1, ..., A8, B8, and C8 (only the terminal A1, B4, C4, and C8 are shown), a power source terminal P, and a ground terminal E. Of the 24 segment terminals, the 13 terminals C4, A5, B5, C5 to A8, B8, and C8 also serve as terminals for key detection signals.

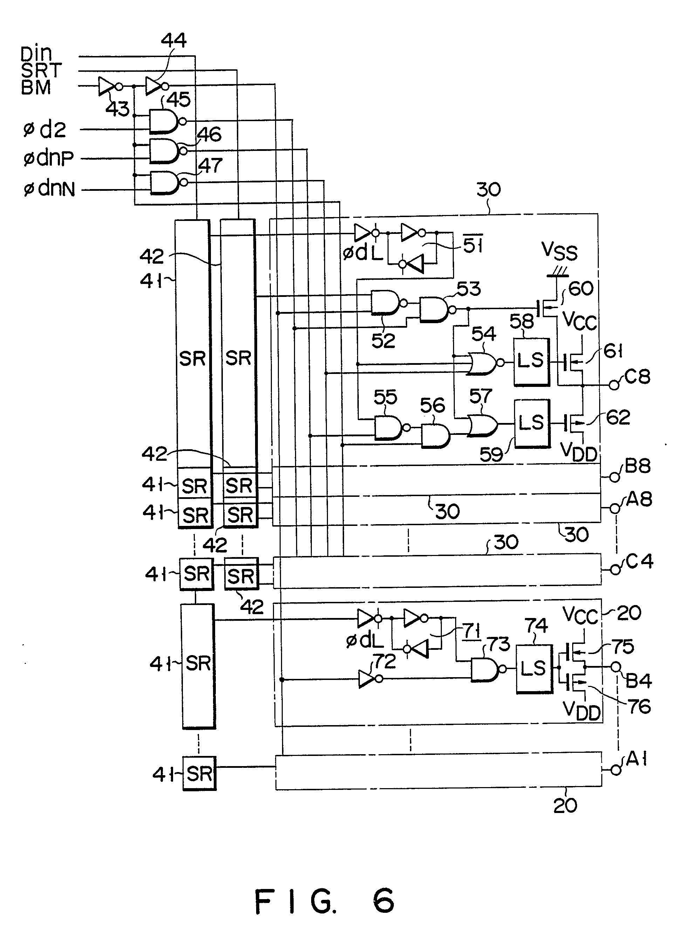

Fig. 5 shows a schematic operation of such an electronic calculator. When the power source is turned on, key input wait processing is executed. If a key of the key switch unit 12 is depressed during execution of this processing, key input processing is executed. In this key input processing, the type of the depressed key is discriminated. Subsequently, operation processing is executed on the basis of the discriminated key, and display data is generated in accordance with an operation result. The flow of operation does not return to the key input wait processing immediately after the operation is completed, but goes to processing for detecting the presence/absence of a key input corresponding to an off-chattering period. As shown in Fig. 5, a display operation in the liquid crystal display unit 11 is started from a time point at which the execution of the operation processing is completed, and is continued until execution of the next key input processing is started.

According to the portable electronic calculator of the present invention, display signals are intermittently output as pulses, as in a conventional calculator, during execution of processing for detecting the presence/absence of a key input, thus preventing a current from flowing from the power source due to short-circuiting of the display signals. Furthermore, in the present invention, display signals are intermittently output during execution of key input wait processing so as to prevent a current from flowing from the power source due to short-circuiting of the display signals.

The period of the key detection signal (the signal $\phi11$ in Fig. 1) is sufficiently longer than that of the clock signal (the signal P3 in Fig. 1). For this reason, if display signals are short-circuited during key input wait processing, a large current flows during this period. However, since display signals are intermittently output as pulses even during this key input wait processing, even if display signals are short-circuited, a short-circuit current can be substantially eliminated as will be described later.

Fig. 6 is a circuit diagram showing part of the internal circuit of the LSI 13. In this case, the liquid crystal display unit 11 has 8 display digits and employs a 1/3 duty, 1/2 prebias scheme as a display scheme. As described above, the LSI 13 has two key input terminals and 24 display segment terminals. Of the 24 segment terminals, 13 terminals are also used as terminals for key detection signals. In addition, the key switch unit 12 has a 26-key matrix.

Referring to Fig. 6, reference symbols A1, B1, C1 to A3, B3, C3, A4, and B4 respectively denote terminals exclusively used to output only display signals (only the terminals A1 and B4 are shown); and C4, A5, B5, C5 to A8, B8, and C8, terminals serving both as terminals for outputting display signals and terminals for outputting key input signals by superposing them on display signals (only the terminals C4, A8, B8, and C8 are shown). In addition, the terminals C4, A5, C5 to A8, B8, and C8 output key discrimination signals for discriminating depressed keys.

Display signal output circuits 20 are respectively connected to the terminals A1, B1, C1 to A3, B3, and C3 exclusively used for display signals. Display signal/key detection signal output circuits 30 are respectively connected to the terminals C4, A5, B5, C5 to A8, B8, and C8 used for both display and key input signals.

Display data Din output from the display RAM (not shown) are sequentially supplied to the display signal/key detection signal output circuits 30 and the display signal output circuits 20 through 1-bit shift registers (SR) 41 respectively arranged for the circuits 30 and 20. Start signals SRT are sequentially supplied to the corresponding circuits 30 through 1-bit shift registers (SR) 42 respectively arranged for the circuits 30.

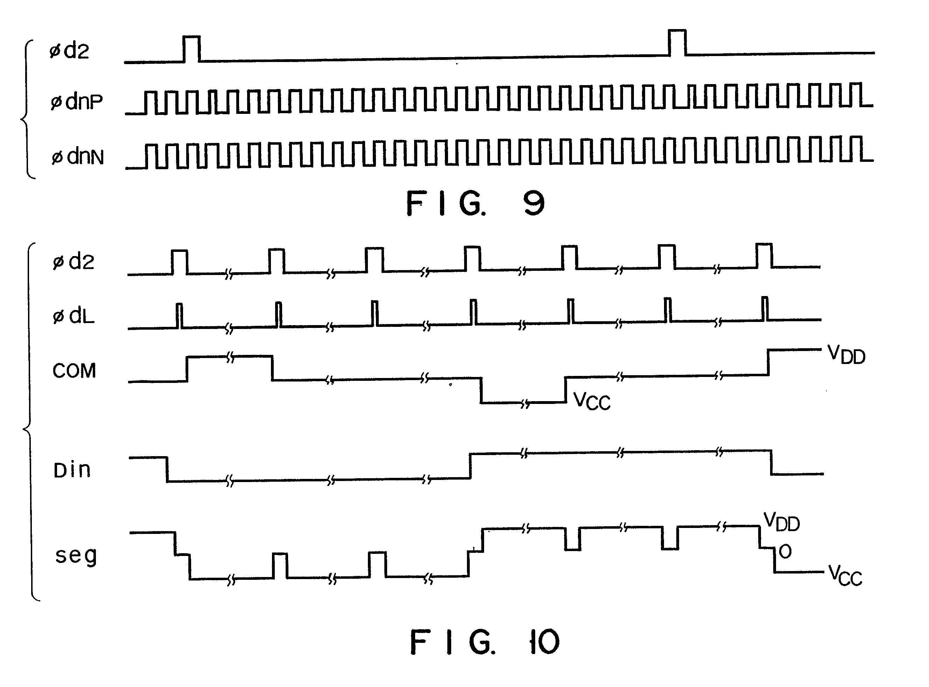

An operation signal BM is supplied to an inverter 43. An output from the inverter 43 is supplied to one input terminal of each of three NAND gates 45, 46, and 47. A key detection signal $\phi d2$ is supplied to the other input terminal of the NAND gate 45. A clock signal $\phi dnP$ is supplied to the other input terminal of the NAND gate 46. A clock signal $\phi dnN$ is supplied to the other input terminal of the NAND GATE 47. As shown in Fig. 9, the clock signals $\phi dnP$ and $\phi dnN$ are substantially in phase with each other, and the key detection signal $\phi d2$ has a sufficiently longer period than the clock signals $\phi dnP$ and $\phi dnN$.

Outputs from the inverters 43 and 44 and the three NAND GATES 45, 46, and 47 are respectively supplied to the display signal/key detection signal output circuits 30 and the display signal output circuits 20.

Each display signal/key detection signal output circuit 30, as exemplified by the one connected to the terminal C8, comprises a data latch circuit 51 for latching an output from a corresponding 1-bit shift register 41 in synchronism with a clock signal $\phi dL$, a NAND gate 52 for receiving an output from a corresponding 1-bit shift register 42 and an output from the inverter 44, a NAND gate 53 for receiving outputs from the NAND gates 52 and 45, a NOR gate 54 for receiving outputs from the NAND gate 53, the data latch circuit 51, and the NAND gate 47, a NAND gate 55 for receiving outputs from the data latch circuit 51 and the NAND gate 46, an AND gate 56 for receiving outputs from the NAND gate 55 and the inverter 43, an OR gate 57 for receiving outputs from the AND gate 56 and the NAND gate 53, level shift circuits (LSs) 58 and 59 for shifting the levels of outputs from the NOR and OR gates 54 and 57, respectively, an n-channel MOS transistor 60 having a gate for receiving an output from the NAND gate 53 and a source-drain path inserted between the terminal C8 and a ground voltage VSS of 0 V, an n-channel MOS transistor 61 having a gate for receiving an output from the level shift circuit 58 and a source-drain path inserted between the terminal C8 and a power source voltage VCC of, e.g., -1.5 V, and a p-channel MOS transistor 62 having a gate for receiving an output from the level shift circuit 59 and a source-drain path inserted between the terminal C8 and a power source voltage VDD of, e.g., +1.5 V. The power source voltage VDD and the ground voltage VSS are directly applied to the LSI 13 from the solar cell 14 through the terminals P and E, and the power source voltage VCC of -1.5 V is generated by a power source circuit (not shown) in the LSI 13.

Each display signal output circuit 20, as exemplified by the one connected to the terminal B4, comprises a data latch circuit 71 for latching an output from a corresponding 1-bit shift register 41 in synchronism with a clock signal $\phi dL$, an inverter 72 for receiving an output from the inverter 44, a NAND gate 73 for receiving outputs from the data latch circuit 71 and the inverter 72, a level shift circuit (LS) 74 for shifting the level of an output from the NAND gate 73, an n-channel MOS transistor 75 having a gate for receiving an output from the level shift circuit 74 and a source-drain path inserted between the terminal B4 and the power source voltage VCC, and a p-channel MOS transistor 76 having a gate for receiving an output from the level shift circuit 74 and a source-drain path inserted between the terminal B4 and the power source voltage VDD.

Each of the level shift circuits 58, 59, and 74 converts an input signal having a voltage amplitude between the ground voltage VSS and the source voltage VDD into a signal having a voltage amplitude between the voltages VDD and VCC.

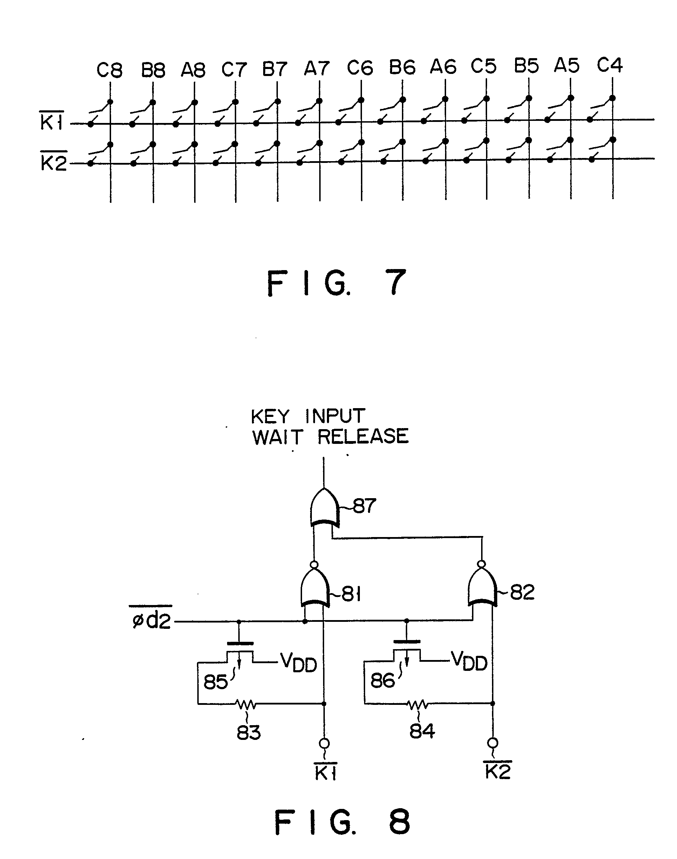

Fig. 7 is a circuit diagram showing a detailed arrangement of the key switch unit 12. In this circuit, 26 switches are arranged in the form of a matrix between the 13 terminals C4, A5, B5, C5 to A8, B8, and C8 and the two key input terminals $\overline{K1}$ and $\overline{K2}$. Key detection signals are respectively input to the vertical lines of the matrix, whereas signals obtained at the horizontal lines of the matrix are input to the LSI 13.

Fig. 8 is a circuit diagram showing an arrangement of a key input circuit portion of the LSI 13, to which a signal output from the key switch unit 12 is supplied. One input terminal of each of the NOR gates 81 and 82 is connected to a corresponding one of the two terminals $\overline{K1}$ and $\overline{K2}$ for receiving key input signals which are set at "L" level upon key input. An inverted signal $\overline{\phi d2}$ of the key detection signal $\phi d2$ is supplied to the other input terminal of each of the NOR gates 81 and 82. In addition, one end of each of load resistors 83 and 84 is connected to a corresponding one of the terminals $\overline{K1}$ and $\overline{K2}$. Each of the p-channel MOS transistors 85 and 86 which are controlled by the signal $\overline{\phi d2}$ is inserted between the other end of a corresponding one of the resistors 83 and 84 and the power source voltage VDD. Outputs from the NOR gates 81 and 82 are supplied to the OR gate 87, and an output from the OR gate 87 is supplied to the LSI 13 as a release signal for releasing a key input wait state.

An operation of the circuit having the above-described arrangement will be described below.

While the key input wait processing shown in Fig. 5 is executed, both the start signal SRT and the operation signal BM are set at "L" level in response to an instruction from the ROM (not shown) in the LSI 13. At this time, outputs from the NAND gates 45, 46, and 47 shown in Fig. 6 become inverted signals $\overline{\phi d2}$, $\overline{\phi dnP}$ and $\overline{\phi dnN}$ of the signals $\phi d2$, $\phi dnP$, and $\phi dnN$. As a result, in each display signal/key detection signal output circuit 30, an output from the NAND gate 52 is set at "H" level, and an output from the NAND gate 53 becomes the signal $\phi d2$.

In this state, the display data Din are sequentially output from the RAM (not shown) in the LSI 13, and these data are sequentially supplied to the respective circuits 30 and 20 through the 1-bit shift registers 41. In each circuit 30, the data latch circuit 51 is operated in synchronism with the clock signal $\phi dL$ so as to latch the display data Din, and the latched data is output to the NOR and NAND gates 54 and 55. Assume that the latched display data Din is set at "H" level. Since the clock signal $\overline{\phi dnP}$ is supplied to the NAND gate 55, its output becomes the signal $\phi dnP$, and is supplied to the AND gate 56. Since an output of "H" level is supplied from the inverter 43 to the AND gate 56, the NAND gate 56 also outputs the same signal as the NAND gate 55, i.e., the signal $\phi dnP$. The signal $\phi dnP$ is supplied to the gate of the p-channel MOS transistor 62 through the OR gate 57 and the level shift circuit 59. As a result, the transistor 62 is turned on for a time interval in which the clock signal $\phi dnP$ is at "L" level, and it is turned off for a time interval in which the clock signal $\phi dnp$ is at "H" level. Therefore, a display signal seg output from the terminal C8 is statically set at "H" level during an ON time of the transistor 62, and is dynamically held by a parasitic capacitor (not shown) which is present at the terminal during an OFF time of the transistor 62. That is, the signal seg is intermittently output as pulses in synchronism with the signal $\phi dnP$.

Since an output from the NOR gate 54 is set at "L" level, an output from the level shift circuit 58 is set at "L" level. As a result, the n-channel MOS transistor 61 is turned off. Accordingly, when the display data is set at "H" level, the signal seg output from the terminal of each circuit 30 is set at "H" level, i.e., at the voltage VDD, as shown in Fig. 10. Note that "H" level of the signal seg is statically set only for a time interval in which the clock signal $\phi dnP$ is kept at "L" level. In other time intervals, it is dynamically held.

In contrast to this, if the data Din latched by the data latch circuit 51 is at "L" level, outputs from the NAND and AND gates 55 and 56 are at "H" level. Subsequently, outputs from the OR gate 57 and the level shift circuit 59 are set at "H" level. As a result, the p-channel MOS transistor 62 is turned off. On the other hand, the signal $\overline{\phi dnN}$ is input to the NOR gate 54 to be inverted, and the inverted signal is then supplied to the gate of the n-channel MOS transistor 61 through the level shift circuit 58. For this reason, the transistor 61 is turned on for a time interval in which the signal $\phi dnN$ is set at "H" level. That is, the signal seg output from each circuit 30 is set at "L" level, i.e., at the voltage VCC when the display data is set at "L" level, as shown in Fig. 10. As described above, "L" level of the signal seg is statically set only for a time interval in which the clock signal $\phi dnN$ is kept at "H" level, whereas it is dynamically held for other time intervals.

When key input wait processing is executed in the LSI 13, in each display signal output circuit 20, the data latch circuit 71 is operated in synchronism with the clock signal $\phi dL$ so as to latch the display data Din, and the latched data is output to the NAND gate 73. At this time, the operation signal BM is set at "L" level, and an output from the inverter 72 is set at "H" level. As a result, the display data Din latched by the data latch circuit 71 is output through the level shift circuit 74. When the latched display data is at "H" level, an output from the NAND gate 73 is set at "L" level, and the p-channel MOS transistor 76 is turned on. In contrast to this, when the latched data Din is at "L" level, an output from the NAND gate 73 is set at "H" level, and the n-channel MOS transistor 75 is turned on. Therefore, each circuit 20 for outputting only a display signal constantly and statically outputs a display signal having a level corresponding to display data.

The NAND gate 45 outputs the signal $\overline{\phi d2}$ for a time interval in which the operation signal BM is set at "L" level. In each display signal/key detection signal output circuit 30, an output from the NAND gate 52 is set at "H" level. As a result, the signal $\phi d2$ is inverted by the NAND gate 53 and is input to the gate of the n-channel MOS transistor 60. Thus, the transistor 60 is turned on for a time interval in which the signal $\phi d2$ is set at "H" level. Since an output from the NAND gate 53 is supplied to the NOR and OR gates 54 and 57, their outputs are respectively set at "L" and "H" levels regardless of display data, thereby setting the transistors 61 and 62 in an OFF state. Consequently, the signal seg, which is output from each circuit 30 every "H" level period of the key detection signal $\phi d2$, is set at 0 V, i.e., the ground voltage, as shown in Fig. 10. The signal obtained in this period is a key detection signal to be output to the key switch unit 12. Note that a signal COM shown in Fig. 10 is a common signal to be supplied to a common electrode (not shown) of the liquid crystal display unit 11, and is output from a circuit (not shown) in the LSI 13.

In the key input circuit shown in Fig. 8, while the key input wait processing is executed, the transistors 85 and 86 are turned on in accordance with the timing of the signal $\overline{\phi d2}$, and the two terminals $\overline{K1}$ and $\overline{K2}$ are pulled up to the voltage VDD through the load resistors 83 and 84. Since outputs from the NOR gates 81 and 82 are set at "L" level at this time, the key input wait release signal is kept at "L" level, so that the execution of the key input wait processing is continued.

If one of the key switches in Fig. 7 is depressed during the execution of the key input wait processing, and the signal seg in Fig. 10 is input to the terminal $\overline{K1}$ and $\overline{K2}$, one or both of the outputs from the NOR gates 81 and 82 is/are set at "H" level in a period corresponding to a key detection signal, and the release signal is set at "H" level. In response to the release signal, release of a wait signal WAIT is performed in a wait signal control circuit (not shown). Even if display signals are short-circuited due to simultaneous key depression in a time interval between the instance when the above-mentioned key is depressed and the instance when the wait signal WAIT is released, no DC current flows between the power source voltages VDD and VCC for the following reason. In each display signal/key detection signal output circuit 30 for superposing a key detection signal on a display signal and outputting them, the display signal is set at "H" level during an "L" level period of the clock signal $\phi dnP$, whereas the display signal is set at "L" level during an "H" level period of the the clock signal $\phi dnN$ which is substantially in phase with the clock signal $\phi dnP$. With this operation, in different circuits 30, the n- and p-channel MOS transistors 61 and 62 are not turned on at the same time. Therefore, even if a battery having a low-current capacity, such as a solar cell, is employed, a battery voltage does not drop below an operating voltage upon simultaneous key depression, thus preventing an operation error in the LSI.

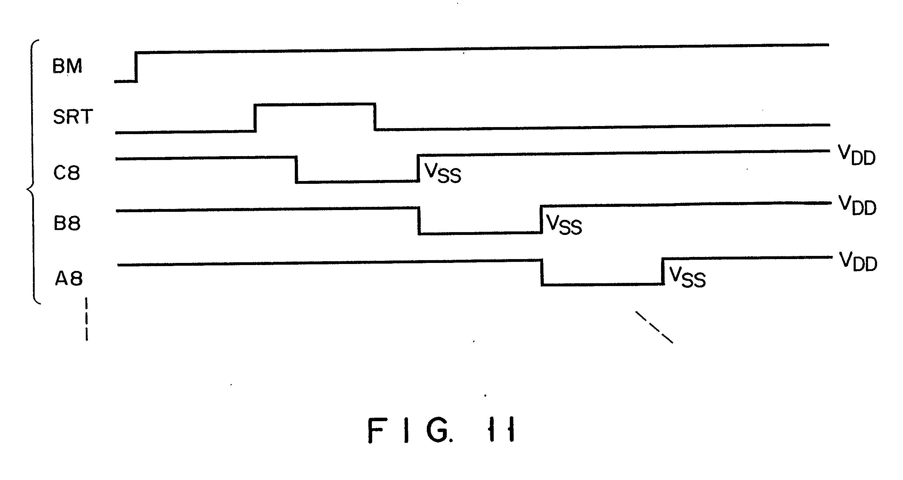

When the wait signal WAIT is released, the operation signal BM is set at "H" level, as shown in Fig. 11. At this time, in the circuit shown in Fig. 6, outputs from the inverters 43 and 44 are respectively set at "L" and "H" levels, whereas all the outputs from the NAND gates 45, 46, and 47 are set at "H" level. As a result, in each display signal/key detection signal output circuit 30, an output from the NOR gate 54 is set at "L" level, and the transistor 61 is turned off. In an initial state, outputs from all of the 1-bit shift registers 42 are set at "L" level. As a result, an output from each NAND gate 52 is set at "H" level, and a subsequent output from the NAND gate 53 is set at "L" level, so that the transistor 60 is turned off. In addition, since both outputs from the AND and NAND gates 56 and 53 are set at "L" level, an output from the OR gate 57 is set at "L" level. As a result, the transistor 62 is turned on. That is, upon release of the wait signal WAIT, the transistors 62 in the circuits 30 are turned on, and hence all the signals seg are set at "H" level.

Subsequently, the start signal SRT is kept at "H" level for a predetermined time interval due to the execution of the key input processing, and the signal SRT is supplied to each display signal/key detection signal output circuit 30 through a corresponding 1-bit shift register 42. An output from the 1-bit shift register 42 of the circuit 30 connected to the terminal C8 is first set at "H" level. An output from the NAND gate 52 is inverted from "H" level to "L" level. Subsequently, an output from the NAND gate 53 is set at "H" level, and the transistor 60 is turned on. When the signal of "H" level from the NAND gate 53 is supplied to the OR gate 57, an output from the OR gate 57 is set at "H" level. As a result, the transistor 62, which has been turned on, is turned off. As a result, a signal of "L" level is output from the terminal C8. The "L"-level signal is supplied to the key switch unit 12 as a key discrimination signal.

Subsequently, when the signal SRT is shifted by one bit, an output from the 1-bit shift register 42 of the circuit 30 connected to the terminal B8 is set at "H" level. In this case, a signal from the terminal B8 goes to "L" level in the same manner as described above. Similarly, when the start signal SRT is sequentially shifted in each 1-bit shift register 42, signals from the terminals A8, C7, B7, A7, ..., C4 are sequentially kept at "L" level for a predetermined period of time. These "L"-level signals are supplied to a key discriminating circuit (not shown) connected to the key input terminals $\overline{K1}$ and $\overline{K2}$ in Fig. 8 through the key switch unit 12, thus discriminating the type of depressed key.

In the circuit shown in Fig. 6, when the operation signal BM is set at "L" level, the NAND gates 46 and 47 output inverted signals of the clock signal $\phi dnP$ and $\phi dnN$. Therefore, it is apparent that generation of a short-circuit current due to short-circuiting of display signals can be prevented even in a so-called off-chattering period, in which the flow of processing returns to the key input wait processing upon completion of operation processing.

As has been described above, since a portable electronic calculator of the present invention can prevent an operation error caused by an instantaneous increase in current consumption due to simultaneous key depression in a key input wait period, it can employ a battery having a low-current capacity, such as a solar cell.

## Claims

1. A portable electronic calculator comprising:
a display section (11) for performing display operations in accordance with display signals;
a key input section (12) for entering various data; and
an integrated circuit (13), including a plurality of display signal output terminals, for performing key input wait processing for input from said key input section, key input processing for determining a kind of key when input is performed through said key input section, operation processing for performing an operation corresponding to the determined kind of key and generating display data in accordance with the operation result, and key presence/absence processing for detecting the presence/absence of input from said key input section upon completion of the operation processing, and for intermittently driving said display signal output terminals in accordance with the display data during execution of the key input wait processing and the key presence/absence processing so as to cause said terminals to output pulse-like signals.

2. A portable electronic calculator comprising:
a display section (11) for performing display operations in accordance with display signals;
a key input section (12) for entering various data;
an integrated circuit (13), including a plurality of display signal output terminals, for generating display signals for causing said display section to perform display operations and key detection signals to be supplied to said key input section, and superposing the signals to output the superposed signal from each of said display signal output terminals; and
display signal output control means (30), arranged in said integrated circuit (13), for causing the display signals to be intermittently output for a time interval in which the display signals are output from said display signal output terminals.

3. A calculator according to claim 2, characterized in that said display signal output control means (30) comprises, for each of said plurality of terminals,
a first transistor (61) of a first polarity inserted between said terminal and a first power source voltage (VCC),
a second transistor (62) of a second polarity inserted between said terminal and a second power source voltage (VDD), and
control means (54, 55, 56, 57) for controlling said first and second transistors (61, 62) in accordance with in-phase control signals ($\phi$dnP, $\phi$dnN) when the display signal is output from said terminal.

4. A calculator according to claim 2, characterized in that said display signal output control means (30) comprises a first transistor (61), a second transistor (62), a first logic circuit (54), and a second logic circuit (55, 56, 57) for each of said plurality of terminals,
said first transistor (61) is inserted between said terminal and a first power source voltage (VCC), an output from said first logic circuit (54) being supplied to a control terminal of said transistor (61),
said second transistor (62) is inserted between said terminal and a second power source voltage (VDD), an output from said second logic circuit (55, 56, 57) being supplied to a control terminal of said transistor (62),
display data (Din), and a first control signal (BM) and a first clock signal ($\phi$dnN), corresponding to a display period, are supplied to said first logic circuit (54), said logic circuit (54) outputting a signal for controlling said first transistor (61) in accordance with the supplied signals, and
the display data (Din), and the first control signal (BM) and a second clock signal ($\phi$dnP), corresponding to the display period, are supplied to said second logic circuit (55, 56, 57), said logic circuit (55, 56, 57) outputting a signal for controlling said second transistor (62) in accordance with the supplied signals.

5. A calculator according to claim 4, characterized in that said first logic circuit (54) and said second logic circuit (55, 56, 57) respectively fix outputs therefrom to a predetermined level regardless of the level of the display data (Din) when the first control signal (BM) is set at one level, and fix the outputs at a predetermined level or output pulse-like signals synchronized with the first clock signal ($\phi$dnN) or second clock signal ($\phi$dnP) in accordance with the level of the display data (Din) when the first control signal (BM) is set at the other level.

6. A calculator according to claim 3, characterized in that said display signal output control means (30) comprises a first transistor (61), a second transistor (62), a third transistor (60), a first logic circuit (54), a second logic circuit (55, 56, 57), and a third logic circuit (52, 53) for each of said plurality of display signal output terminals,
said first transistor (61) is inserted between said display signal output terminal and a first power source voltage (VCC), an output from said first logic circuit (54) being supplied to a control terminal of said transistor (61),
said second transistor (62) is inserted between said display signal output terminal and a second power source voltage (VDD), an output from said second logic circuit (55, 56, 57) being supplied to a control terminal of said transistor (62),

said third transistor (60) is inserted between said display signal output terminal and a third power source voltage (VSS), an output from said third logic circuit (52, 53) being supplied to a control terminal of said transistor (60),

display data (Din), and a first control signal (BM) and a first clock signal ($\phi$dnN), corresponding to a display period, are supplied to said first logic circuit (54), said logic circuit (54) outputting a signal for controlling said first transistor (61) in accordance with the supplied signals,

the display data (din), and the first control signal (BM) and a second clock signal ($\phi$dnP), corresponding to the display period, are supplied to said second logic circuit (55, 56, 57), said logic circuit (55, 56, 57) outputting a signal for controlling said second transistor (62) in accordance with the supplied signal, and

the first control signal (BM) corresponding to the display period, and a second control signal (SRT) and a third clock signal ($\phi$d2) for key input detection are supplied to said third logic circuit (52, 53), said logic circuit (52, 53) outputting a signal for controlling said third transistor (60) in accordance with the supplied signals.

7. A calculator according to claim 6, characterized in that the output from said third logic circuit (52, 53) is further supplied to said first logic circuit (54) and said second logic circuit (55, 56, 57).

8. A calculator according to claim 1, characterized in that a voltage from a solar cell (14) is applied to said integrated circuit (13).

9. A calculator according to claim 2, characterized in that a voltage from a solar cell (14) is applied to said integrated circuit (13).

FIG. 1

FIG. 2

FIG. 3

F I G. 4

F I G. 5

F I G. 6

C8 B8 A8 C7 B7 A7 C6 B6 A6 C5 B5 A5 C4

$\overline{K1}$

$\overline{K2}$

# F I G. 7

KEY INPUT
WAIT RELEASE

87

81 82

$\overline{\phi d2}$

85 $V_{DD}$ 86 $V_{DD}$

83 84

$\overline{K1}$ $\overline{K2}$

# F I G. 8

ød2

ødnP

ødnN

F I G. 9

øigd2

ødL

COM — $V_{DD}$

$V_{CC}$

Din

seg — $V_{DD}$

0

$V_{CC}$

F I G. 10

EP 0 335 376 A2

F I G. 11

BM

SRT

C8 — $V_{DD}$

$V_{SS}$

B8 — $V_{DD}$

$V_{SS}$

A8 — $V_{DD}$

$V_{SS}$

EP 0 335 376 A2